Europäisches Patentamt

European Patent Office

Office européen des brevets

(19)

(11) Veröffentlichungsnummer: **0 225 428**
B1

(12) EUROPÄISCHE PATENTSCHRIFT

(45) Veröffentlichungstag der Patentschrift:
13.06.90

(51) Int. Cl.⁵: **H04N 1/40**, H04N 1/41,
G06F 15/64

(21) Anmeldenummer: 86110641.7

(22) Anmeldetag: 01.08.86

(54) Verfahren zur Erkennung von Kantenstrukturen in einem Bildsignal.

(30) Priorität: 30.11.85 DE 3542484

(43) Veröffentlichungstag der Anmeldung:
16.06.87 Patentblatt 87/25

(45) Bekanntmachung des Hinweises auf die Patenterteilung:
13.06.90 Patentblatt 90/24

(84) Benannte Vertragsstaaten:
DE FR GB IT NL SE

(56) Entgegenhaltungen:
EP-A- 0 148 959
EP-A- 0 149 457
DE-A- 3 501 830
GB-A- 2 121 534

PATTERN RECOGNITION, Band 16, Nr. 4, 1983,
Seiten 413-320, Pergamon Press, Ltd, Elmsford, New
York, US; P.D. HYDE et al.: "Subpixel edge estimation"
PATENT ABSTRACTS OF JAPAN, Band 6, Nr. 12,
(E-91)[890], 23. Januar 1982; & JP-A-56 132 867 (RICOH
K.K.) 17-10-1981
W.K. PRATT et al.: "Digital image processing", 1978,
Seiten 471-499, Kapitel 17, Interscience Publication,
John Wiley & Sons, New York, US

(73) Patentinhaber: ANT Nachrichtentechnik GmbH,
Gerberstrasse 33, D-7150 Backnang(DE)

(72) Erfinder: Lohscheller, Herbert, Dr.-Ing., Mairichweg 8,
D-7152 Aspach(DE)

## Beschreibung

Die Erfindung betrifft ein Verfahren gemäß dem Oberbegriff des Patentanspruchs 1. Ein solches Verfahren ist bekannt aus DE-A1 2 831 297. Das dortige Rechenwerk verarbeitet nur zweistufige Binärinformationen.

Aus der US-A 4 189 711 ist es an sich bekannt, Bildbereiche nach verschiedenen Helligkeitsbereichen einzuteilen.

Verfahren zur Erkennung von Kantenstrukturen in einem Bildsignal sind außerdem bekannt aus dem Buch «Digital Image Processing» von William K. Pratt, A Willey-Interscience Publication; John Wiley & Sons, New York, Chichester, Brisbane, Toronto, 1978 Chapter 17: «Image feature Extraction», Seiten 471 bis 499. Hier werden verschiedene Verfahren vorgestellt und miteinander verglichen, mit denen Kantenstrukturen in einem Bildsignal erkannt werden können. Die Unterscheidungsfähigkeit zwischen Strukturen und Nichtstrukturen ist bei verschiedenen Verfahren recht gut und der Realisierungsaufwand z.B. in bezug auf die Anzahl der Multiplikationen unterschiedlich. Jedoch ist die Orientierung der Kanten mit den bekannten Verfahren nur schwer zu erkennen, insbesondere sind Orientierungen, die nicht horizontal, vertikal oder unter 45° zur Horizontalen verlaufen nicht erkennbar. Außerdem sind die bekannten Verfahren sehr empfindlich in bezug auf die Festlegung ihrer Ansprechschwelle.

Aus der EP-A1 0 148 959 ist es bei der redundanzmindernden Transformationskodierung von digitalen Bildsignalen bekannt, das gesamte Bildsignal zur Erkennung von Kantenstrukturen zeilenweise abzutasten und in Teilbildbereiche zu unterteilen, die jeweils geschlossen kodiert werden. Aus diesen Teilbildbereichen werden jeweils Fenster, bestehend aus einem Bildpunkt und seinen unmittelbar benachbarten Umgebungspunkten, in einem Schieberegister gespeichert und logischen Verknüpfungsoperationen (Addition, Vergleich) unterzogen zur Gewinnung eines Binärwertes zur Steuerung eines Bildkodierungsalgorithmus. Eine Orientierungskennzeichnung von Kanten erfolgt dort nicht.

Aus «Pattern Recognition, Bd 16, Nr. 4, 1983, Seiten 413 bis 420 sind Verfahren zur Ermittlung der Kantenlage in Bildvorlagen bekannt. Anhand von Bildhelligkeitswerten werden die Parameter «Abstand» und «Winkel» einer Kante von einem Bezugspunkt aus ermittelt. Mit der «Least-Squares» oder der «Maximum-Likelihood»-Methode erfolgt nur eine Entscheidung, ob eine Kante das Gebiet eines Bildpunktes durchläuft. Eine Kennzeichnung der Orientierung um einen Bildpunkt erfolgt hier ebenfalls nicht.

Bei einem Verfahren gemäß DE-A1 3 501 830 wird eine Bildvorlage in eine Anzahl von Bereichen aufgeteilt. Für Unterbereiche wird jeweils der Helligkeitsmittelwert ermittelt und mit einem Schwellwert eines Bezugsbildes verglichen zur Bildung einer Bereichsadressenfolge. Zur Datenreduktion wird diese Adressenfolge einer vorbestimmten Kodierung unterzogen.

Der Erfindung liegt die Aufgabe zugrunde, ein Verfahren zur Erkennung von Kantenstrukturen in einem Bildsignal anzugeben, das vor allem dazu geeignet ist, Kanten mit einer Orientierung, die nicht horizontal, vertikal oder unter 45° zur Horizontalen ausgeprägt sind, mit einem geringeren Aufwand als es bisher möglich war, zu erkennen; dabei soll das Verfahren für die Verarbeitung von Standbildern geeignet sein.

Die Aufgabe wird gelöst, wie im Kennzeichen des Anspruchs 1 beschrieben. Die abhängigen Ansprüche geben vorteilhafte Ausbildungen an.

Im folgenden sei die Erfindung anhand von einem Ausführungsbeispiel mit Hilfe von Figuren näher erläutert.

Fig. 1 zeigt ein Blockschaltbild zur Realisierung des erfindungsgemäßen Verfahrens.

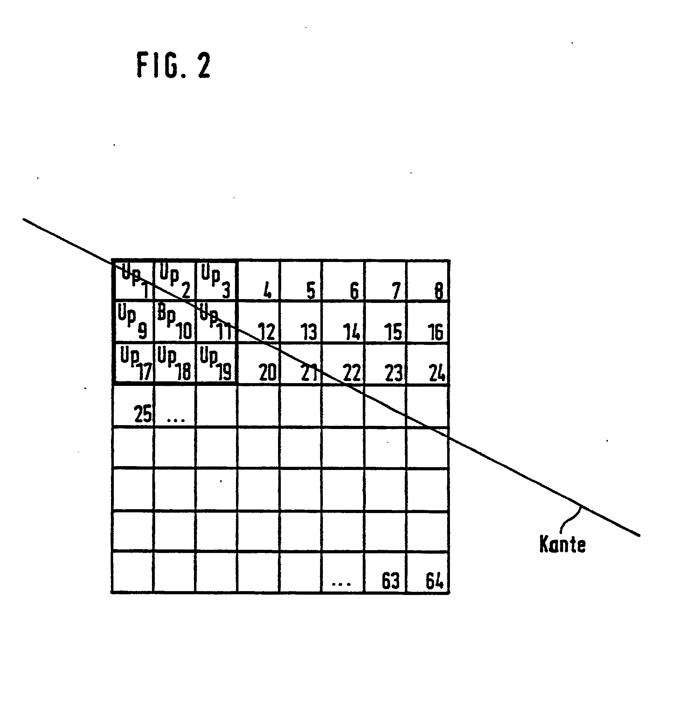

Fig. 2 zeigt einen Teilbildbereich der 64 Bildpunkte umfaßt mit einer schief verlaufenden Kante, dabei bedeutet Bp = Bildpunkt, Up = Umgebungspunkt.

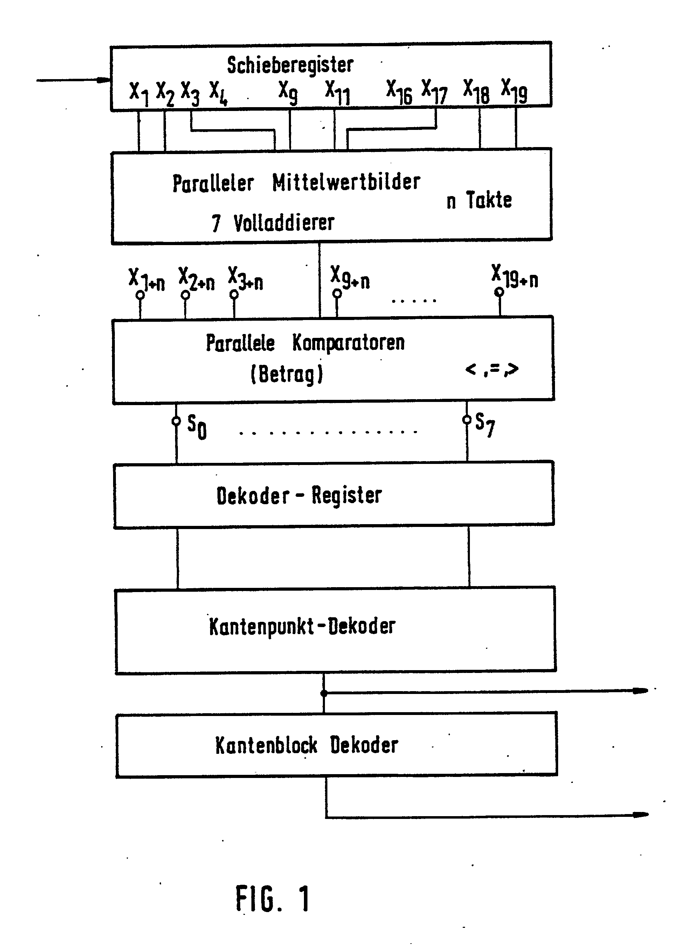

Das gesamte Standbild wird in Teilbildbereiche eingeteilt. Aus dem Teilbildbereich werden jeweils n Fenster bestehend aus jeweils einem Bildpunkt Bp mit seinen Umgebungspunkten Up in einem Schieberegister eingeschrieben (siehe dazu Fig. 1). Die Anzahl n der gespeicherten Fenster hängt im wesentlichen von der Verarbeitungszeit des nachfolgenden Mittelwertbildners ab, denn nach der Bildung des ersten Mittelwertes ist inzwischen der eingeschriebene Bildpunkt und die zugehörigen Umgebungspunkte um n Takte weitergeschoben worden. Zu dem sich anschließenden Vergleich des Mittelwertes mit den dazugehörigen Umgebungspunkten, werden die entsprechenden inzwischen um n Speicherplätze weitergeschobenen Umgebungspunkte $Up_{1+n}$, ... $Up_{19+n}$ herangezogen.

Aus dem Vergleich ergeben sich die dreiwertigen (1, 0, -1) Signale ($S_0$ ... $S_7$).

Diese dreiwertigen Signale werden zwischengespeichert in dem Dekoderregister und zur weiteren Verarbeitung im Kantenpunkt-Dekoder bereitgestellt.

Im Kantenpunkt-Dekoder wird nun entschieden, ob der betreffende Bildpunkt ein Kantenpunkt ist oder nicht und zwar nach der Vorschrift des Anspruchs 2 oder 3.

Sind im Kantenpunkt-Dekoder mehrere Kantenpunkte erkannt worden, so wird im nachfolgenden Kantenblock-Dekoder entschieden, ob der ganze Teilbildbereich als ein Kantenblock kodiert werden soll oder nicht. Der Kantenblock-Dekoder gibt dann entsprechend eine log. 1 oder eine log. 0 an seinem Ausgang ab, um damit einen Bildkodierungsalgorithmus zu beeinflussen.

Die wesentlichen Vorteile des erfindungsgemäßen Verfahrens liegen in der Unabhängigkeit der Kantendetektion von der Ansprechschwelle, der einfachen technischen Realisierbarkeit des Verfahrens und der sicheren Selektionsfähigkeit der Kantenorientierung, insbesondere auch für schiefe Kanten.

## Patentansprüche

1. Verfahren zur Erkennung von Kantenstrukturen in einem Bildsignal, wobei aus der Umgebung eines Bildpunktes ein Entscheidungskriterium gewonnen wird, um eine Kodierung mit möglichst geringer Bitzahl zu erreichen, wobei in Bildbereichen jeweils Fenster bestehend aus einem Bildpunkt und seinen unmittelbar benachbarten Umgebungspunkten in vorgegebener Reihenfolge in einem Schieberegister gespeichert werden und jeweils nur die unmittelbar benachbarten Umgebungspunkte eines Bildpunktes parallel aus dem Schieberegister ausgelesen und einem Rechenwerk zur Mittelwertbildung zugeführt werden und wobei als Kante detektierte Bildpunkte (1) und nicht als Kante detektierte Bildpunkte (0) binär gekennzeichnet werden, dadurch gekennzeichnet,
– daß das gesamte Bild in Teilbildbereiche unterteilt ist, die jeweils geschlossen kodiert werden,
– daß der jeweils ermittelte Mittelwert einem Komparator zugeführt wird und der Komparator diesen Mittelwert mit den dazugehörigen aus dem Schieberegister entnommenen benachbarten Umgebungspunkten eines Bildpunktes jeweils einzeln vergleicht und daraus ein dreiwertiges Signal (1, 0, −1) gewinnt, je nachdem ob die Helligkeit eines Umgebungspunktes um einen vorgegebenen Betrag oberhalb (1) oder innerhalb (0) oder unterhalb (−1) eines Toleranzbereiches liegt,
– daß diese einzelnen dreiwertigen Vergleichsergebnisse zwischengespeichert werden und zur Erkennung von Kanten und ihre Orientierung in der Form benutzt werden, daß die Anzahl der Wertigkeiten (1, 0, −1) und ihre Reihenfolge in festgelegter Richtung um den Bildpunkt die Orientierung erkennbar machen,
– daß durch eine frei wählbare Anzahl von ermittelten Kantenbildpunkten und durch ihre örtliche Nachbarschaft im Teilbildbereich festgelegt wird, ob dieser Teilbildbereich insgesamt als ein Kantenblock aufzufassen ist und dementsprechend durch einen Binärwert zu kennzeichnen ist,
– daß dieser Binärwert für einen ganzen als Kantenblock aufzufassenden Teilbildbereich zur Steuerung eines Bildkodierungsalgorithmusses verwendet wird.

2. Verfahren nach Anspruch 1, dadurch gekennzeichnet,
– daß das aus dem durch den Helligkeitsvergleich erzeugte dreiwertige Signal (1, 0, −1) bei zusammenhängendem Durchlauf der acht Umgebungspunkte (Up$_1$, Up$_2$, Up$_3$, Up$_{11}$, Up$_{19}$, Up$_{18}$, Up$_{17}$; Up$_9$) um einen Bildpunkt (Bp$_{10}$) in der Form auf die Orientierung einer Kante geschlossen wird, daß bei vier unmittelbar aufeinanderfolgenden positiven Wertigkeiten (1) und vier unmittelbar aufeinanderfolgenden negativen Wertigkeiten (−1) der Kantenverlauf schief (d.h. nicht diagonal, horizontal oder vertikal) verläuft und daß die Lage der Wertigkeitswechsel (1, −1) und (−1, 1) innerhalb der Umgebungspunkte die Neigung des Kantenverlaufs festlegt.

3. Verfahren nach Anspruch 1, dadurch gekennzeichnet,
– daß das aus dem durch den Helligkeitsvergleich erzeugte dreiwertige Signal (1, 0, −1) bei zusammenhängendem Durchlauf der acht Umgebungspunkte (Up$_1$, Up$_2$, Up$_3$, Up$_{11}$, Up$_{19}$, Up$_{18}$, Up$_{17}$, Up$_9$) eines Bildpunktes (Bp$_{10}$) in der Form auf die Orientierung einer Kante geschlossen wird, daß bei einem Verhältnis der unmittelbar aufeinanderfolgenden positiven (1) und negativen (−1) Wertigkeiten von drei/fünf oder umgekehrt fünf/drei der Kantenverlauf je nach der Lage des Wertigkeitswechsels von der Dreier- zur Fünferkette innerhalb der Umgebungspunkte vertikal (Wechsel bei Up$_1$, Up$_2$ oder Up$_{19}$, Up$_{18}$) diagonal (Wechsel bei Up$_2$, Up$_3$ oder Up$_{11}$, Up$_{19}$ oder Up$_{18}$, Up$_{17}$) oder horizontal (Wechsel bei Up$_3$, Up$_{11}$ oder Up$_{17}$, Up$_9$) verläuft.

4. Verfahren nach Anspruch 1 und 2 oder 3, dadurch gekennzeichnet,
– daß die Verarbeitung der Fenster sukzessiv von Bildpunkt zu Bildpunkt erfolgt (Bp$_{10}$, Bp$_{11}$, Bp$_{12}$, ...).

## Claims

1. A method of detecting the edge structures in a video signal, with a decision criterion being derived from the environment of a pixel so as to effect coding with the least number of bits, with windows each composed of one image pixel and its immediately adjacent environment pixels being stored in a given sequence in a shift register and only the immediately adjacent environment pixels of an image pixel are read out of the shift register in parallel and are fed to a computer for the formation of an average and image pixels (1) identified as an edge as well as image pixels (0) identified as not being an edge are binarily marked, characterized in that
– the entire image is subdivided into partial image regions which are each coded as a whole;
– the respectively determined average is fed to a comparator and the comparator individually compares this average with the associated adjacent environment pixels taken from the shift register for each image pixel and derives a three-value signal therefrom (1, 0, −1) depending on whether the brightness of an environment pixel lies a given amount above (1), within (0), or below (−1) a tolerance range;
– these individual three-value comparison results are intermediately stored and utilized to detect edges and their orientation in such a manner that the number of the values (1, 0, −1) and their sequence in a fixed direction around the image pixel define the edge orientation;
– it is determined, by way of a freely selectable number of determined edge pixels and their local association in said partial image region, whether this partial image region as a whole is to be considered an edge block and thus to be marked by a binary value;
– this binary value for the entire partial image region that is to be considered an edge block is utilized to control an image coding algorithm.

2. A method according to claim 1, characterized in that a conclusion is drawn from a comparison of the brightness during contiguous passage of the eight environment pixels (Up$_1$, Up$_2$, Up$_3$, Up$_{11}$, Up$_{19}$, Up$_{18}$, Up$_{17}$, Up$_9$) around one image pixel (Bp$_{10}$) as to the orientation of an edge in that, if there are four immediately consecutive positive values (1) and four immediately consecutive negative values (−1), the edge curve is oblique (i.e. not diagonal, horizontal or vertical) and the position of the changes in value (1, −1) and (−1, 1) within the environment pixels determines the inclination of the edge curve.

3. A method according to claim 1, characterized in that a conclusion is drawn from a comparison of the brightness during contiguous passage of the eight environment pixels ($Up_1$, $Up_2$, $Up_3$, $Up_{11}$, $Up_{19}$, $Up_{18}$, $Up_{17}$, $Up_9$) of one image pixel ($Bp_{10}$) as to the orientation of an edge in that, if the ratio of immediately consecutive positive (1) and negative (−1) values is three/five or, conversely, five/three, depending on the position of the change in value from a chain of three to a chain of five within the environment pixels, the edge curve is determined to be vertical (change at $Up_1$, $Up_2$ or $Up_{19}$, $Up_{18}$), diagonal (change at $Up_2$, $Up_3$ or $Up_{11}$, $Up_{19}$ or $Up_{18}$, $Up_{17}$), or horizontal (change at $Up_3$, $Up_{11}$ or $Up_{17}$, $Up_9$).

4. A method according to claims 1 and 2 or 3, characterized in that the windows are processed consecutively from image pixel to image pixel ($Bp_{10}$, $Bp_{11}$, $Bp_{12}$, ...).

## Revendications

1. Procédé d'identification de structures de contour dans un signal d'image, un critère de décision étant tiré de l'environnement d'un point d'image, afin d'obtenir un codage avec un nombre de bits aussi réduit que possible, des fenêtres dans des domaines d'image, constituées chacune par un point d'image et par les points environnants qui l'entourent immédiatement, étant introduites, selon une séquence prédéterminée, dans un registre à décalage et seuls les points environnants immédiatement voisins d'un point d'image étant à chaque fois extraits en parallèle du registre à décalage et transmis à un dispositif de calcul formateur de valeur moyenne, et les points d'image (1) détectés en tant que bord et les points d'image (0) non détectés en tant que bord étant caractérisés en mode binaire, caractérisé
- par le fait que l'image totale est subdivisée en domaines d'image partiels qui sont codés à chaque fois de manière fermée,
- par le fait que chaque valeur moyenne établie est amenée à un comparateur et le comparateur compare à chaque fois individuellement cette valeur moyenne aux points environnants y afférents voisins d'un point d'image tirés du registre à décalage, et forme à partir de cela un signal ternaire (1, 0, −1) en fonction de ce que la brillance d'un point environnant présente une valeur prédéterminée la situant soit au-dessus (1), soit à l'intérieur (0), soit en dessous (−1) d'un domaine de tolérance,
- par le fait que ces résultats ternaires individuels de la comparaison sont mis en mémoire intermédiaire et utilisés pour identifier des bords et leur orientation dans la forme, de manière telle que le nombre des valeurs significatives (1, 0, −1) et leur suite dans une direction fixée autour du point d'image rende l'orientation identifiable,
- par le fait que, grâce à un nombre librement sélectionnable de points d'image de bord déterminés, et grâce à leur voisinage local dans le domaine d'image partiel, on détermine si ce domaine d'image partiel doit être considéré dans son ensemble comme un bloc de bord et être par conséquent caractérisé par une valeur binaire,
- par le fait que cette valeur binaire pour un domaine d'image partiel complet, à considérer comme bloc de bord, est utilisée pour commander un algorithme de codage d'image.

2. Procédé selon revendication 1, caractérisé
- par le fait qu'à partir du signal ternaire (1, 0, −1) produit par la comparaison de brillance, les huit points ($Up_1$, $Up_2$, $Up_3$, $Up_{11}$, $Up_{19}$, $Up_{18}$, $Up_{17}$; $Up_9$) environnant un point d'image ($Bp_{10}$) dans la forme étant soumis à un passage cohérent, on conclut quant à l'orientation d'un bord par le fait que, dans le cas de quatre valeurs significatives positives (1) consécutives et quatre valeurs significatives négatives (−1) consécutives, le tracé du bord est oblique (c'est-à-dire ni diagonal, ni horizontal ni vertical), et par le fait que la position du changement de valeurs significatives (1, −1) et (−1, 1) au sein des points environnants détermine la pente du tracé du bord.

3. Procédé selon revendication 1, caractérisé
- par le fait qu'à partir du signal ternaire (1, 0, −1) produit par la comparaison de brillance, les huit points ($Up_1$, $Up_2$, $Up_3$, $Up_{11}$, $Up_{19}$, $Up_{18}$, $Up_{17}$; $Up_9$) environnant un point d'image ($Bp_{10}$) dans la forme étant soumis à un passage cohérent, on conclut quant à l'orientation d'un bord par le fait que, dans le cas d'un rapport des valeurs significatives consécutives positives (1) et négatives (−1) de trois/cinq ou inversement cinq/trois, le tracé du bord, selon la position du changement de valeur significative de la chaîne de trois à la chaîne de cinq au sein des points environnants est vertical (changement pour $Up_1$, $Up_2$ ou $Up_{19}$, $Up_{18}$), diagonal (changement pour $Up_2$, $Up_3$ ou $Up_{11}$, $Up_{19}$ ou $Up_{18}$, $Up_{17}$) ou horizontal (changement pour $Up_3$, $Up_{11}$ ou $Up_{17}$, $Up_9$).

4. Procédé selon revendications 1 et 2 ou 3, caractérisé
- par le fait que le traitement de la fenêtre s'effectue successivement de point d'image à point d'image ($Bp_{10}$, $Bp_{11}$, $Bp_{12}$, ...).

FIG. 1

# FIG. 2